(19) **Europäisches Patentamt**

**European Patent Office**

**Office européen des brevets**

(11) **EP 0 994 435 A2**

(12) **EUROPEAN PATENT APPLICATION**

(43) Date of publication:
**19.04.2000 Bulletin 2000/16**

(51) Int. Cl.⁷: **G06K 1/00**

(21) Application number: **99120406.6**

(22) Date of filing: **13.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.10.1998 JP 29508698**

(71) Applicant:
**STAR MICRONICS CO., LTD.
Shizuoka-shi, Shizuoka-ken 422-8654 (JP)**

(72) Inventors:
• **Nishizawa, Yoshikazu
c/o STAR MICRONICS CO., LTD.
Shizuoka-shi, Shizuoka 422-8654 (JP)**
• **Ozawa, Masamitsu
c/o STAR MICRONICS CO., LTD.
Shizuoka-shi, Shizuoka 422-8654 (JP)**
• **Nakamura, Masanari
c/o STAR MICRONICS CO., LTD.
Shizuoka-shi, Shizuoka 422-8654 (JP)**

(74) Representative: **Nöth, Heinz
Patentanwaltskanzlei Nöth
Arnulfstrasse 25
80335 München (DE)**

(54) **Processing method and apparatus for rewritable card**

(57)     Disclosed is a processing apparatus for a rewritable card having a printing layer made of a heat-reversible recording material on which erasing/printing processes of images are repeatedly performed while the card is traveled in a direction. The apparatus comprises an erasing head and a printing head movably disposed along a travel path for the card so as to contact and separate from the printing layer of the card being traveled. The distance between the erasing head and the printing head is set so that the both heads may simultaneously contact the card to simultaneously perform the erasing and the printing.

**Fig. 1**

**Description**

BACKGROUND OF THE INVENTION

The present invention relates to a processing method and to an apparatus for a rewritable card having a printing layer in which images such as characters and patterns can be printed by predetermined heating/cooling processes.

Recently, various kinds of magnetic cards are used for many purposes. Among these, there are types of cards on which changing information is updated and indicated on the card every time the card is used. As examples of such cards, prepaid cards such as telephone cards and train cards on which the balance is indicated, point cards in which points are added according to a purchase amount, and consultation appointment for dental clinics cards in which the next consultation day and time are indicate and the like may be mentioned. In the past, images of changing information were generally written on cards by a printer of the dot impact-type or the thermal-type. In these types of printing, however, all the printed images were remained and the history thereof was indicated, and therefore, it was necessary to make the images small or to enlarge the printing area to obtain the necessary number of printing lines. Therefore, there were problems in that printed images were not easy to read and the area for indicating permanent images such as patterns and names in addition to the variable information was narrow.

Recently, rewritable cards in which previous images are erased and only the newest images are printed at the same position as the previous images are available. Such a rewritable card is manufactured of a resin substrate and a rewritable layer which is made of a heat-reversible recording material and which is laminated on the substrate. A thermal head unit of a card processing apparatus performs heating/cooling processes on the rewritable layer according to the characteristics thereof so as to repeatedly perform erasing/printing, in other words, so as to rewrite images. The card processing apparatus is generally constructed to travel a card, erases images by a erasing head, and then prints new images while traveling.

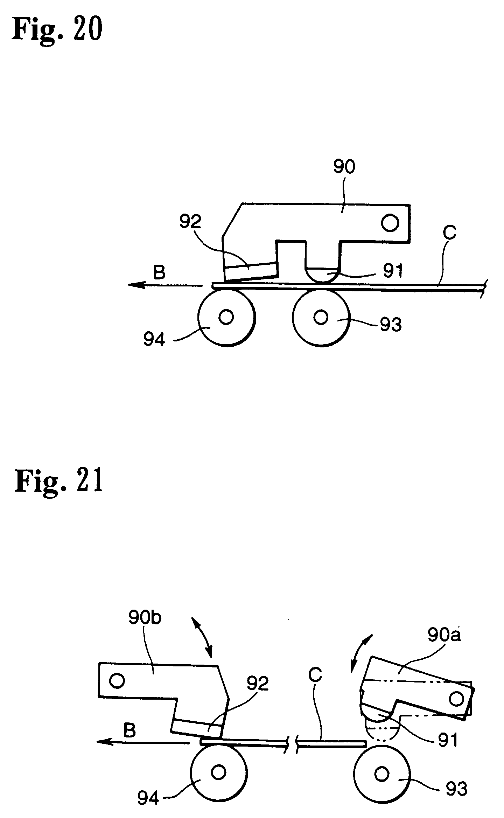

Fig. 20 shows an example of such a conventional card processing apparatus. In the apparatus, a rectangular card C as a rewritable card is traveled to the longitudinal direction thereof. That is, the card C is traveled in the direction taken at arrow B from a standby position set at the right end in the figure. An erasing head 91 and a printing head 92 which are swung up and down by an arm 90 are nearly located to the travel direction, in that order, on a travel path. Platen rollers 93 and 94 constructing a part of the travel path are disposed under the erasing head 91 and the printing bead 92. The heads 91 and 92 are elastically biased to the travel path via the arm 90. When the front end of the card C reaches the printing head 92, the arm 90 swings downward and each head 91 and 92 urges a printing layer of the card C and clamps the card C in cooperation with each platen roller 93 and 94. In this condition, the card C is consecutively traveled, so that the image printed on the printing layer is first erased by the erasing head 91, then a new image is printed on the printing layer by the printing head 92. When the rear end of the card C reaches the printing head 92, the heads 91 and 92 upwardly separate from the card C with the arm 90, thereby completing the erasing /printing processes.

The above apparatus simultaneously drives the erasing head 91 and the printing head 92 by the arm 90. As shown in Fig. 21, there is provided an apparatus in which the erasing head 91 and the printing head 92 are individually driven. The same numerals are applied to the same components in Fig. 21 as in Fig. 20. According to the apparatus, when the front end of the card C reaches the erasing head 91, an arm 90a for the erasing head 91 swings downward and the erasing head 91 thrusts the card C, thereby starting the erasing of the image. The erasing head 91 upwardly swings and separates from the card C just before the card C passes over the erasing head 91. When the front end of the card C reaches the printing head 92 after the short pause when each head 91 and 92 does not contact the card C, an arm 90b for the printing head 92 swings downward and the printing head 92 thrusts the card C, thereby starting printing. The printing is continued according to the travel of the card C. When the rear end of the card C reaches the printing head 92, the printing head 92 simultaneously separates from the card C, thereby completing the erasing/printing processes.

The former card processing apparatus has a construction in which the erasing head and the printing head are driven by one arm, thereby having an advantage in that the driving mechanism can be simple. In the former apparatus, however, the arm cannot be down before the front end of the card C reaches the printing head in order to facilitate the travel of the card C. Therefore, in the former apparatus, the front portion, of which the length thereof corresponds to the distance between the heads, cannot be printed, so that the printing area cannot be established over the entire length of the card C. Although the printing area can be enlarged by shortening the distance between the heads, this method has its limits.

On the other hand, the later card processing apparatus has a construction in which each head is individually driven by each arm, thereby meeting the requirement for enlarging the printing area to be as large as possible. In the later apparatus however, although the heads are separated from each other over the length of the card C, thereby having a long processing area for erasing/printing, there are problems in that the processing time is long and the apparatus is large. Additionally, as the heads are separated for a long distance, substantial amounts of heat radiation from the printing layer, are emitted after it is heated by the erasing head until it reaches the printing head. Therefore, a large amount of energy is required for reheating by the printing head, thereby wasting energy saving.

## SUMMARY OF THE INVENTION

An object of the invention is to provide a processing method and an apparatus for rewritable card, which can enlarge the printing area of a rewritable card, shorten the processing time for erasing /printing, and allow the apparatus to be designed in a compact manner.

The invention provides a processing method for a rewritable card having a printing layer made of a heat-reversible recording material on which erasing/printing processes of images are repeatedly performed while the card is traveled in a direction. The method comprises erasing images printed on the printing layer by an erasing head, and printing images on the printing layer by a printing head. The erasing of the images by the erasing head and the printing of the images by the printing head are simultaneously performed.

According to the method of the invention, in erasing images, images are simultaneously printed at the downstream side thereof while the card is traveled. After and before the simultaneous processes, only erasing or printing is performed according to the distance between the erasing head and the printing head. However, the entire processing time can be shortened by extending the time for simultaneous processes to be as long as possible. Additionally, heat radiation from the printing layer, which is emitted after it is heated by the erasing head until it reaches the printing head, can be reduced. Therefore, the amount of energy required for the printing head to reheat it can be reduced, so that energy saving is enhanced.

The invention also provides a processing apparatus for a rewritable card having a printing layer made of a heat-reversible recording material on which erasing/printing processes of images are repeatedly performed while the card is traveled in a direction. The apparatus comprises: a travel path for the rewritable card; a travel device for traveling the card in a direction along the travel path; an erasing head movably disposed along the travel path so as to contact and separate from the printing layer of the card being traveled, for erasing images printed on the printing layer; a printing head movably disposed along the travel path at a downstream side of the erasing head so as to contact and separate from the printing layer of the card being traveled, for printing images on the printing layer; and an erasing head driving device and a printing head driving device for respectively moving the erasing head and the printing head independently to each other. The distance between the erasing head and the printing head is set so that the both heads may simultaneously contact the card to simultaneously perform the erasing and the printing.

More specifically, when the length of the erasing/printing process area from the erasing head to the printing head, in other words, the distance between the heads, is shorter than the length of the rewritable card in the travel direction, the above set amount of time in which each head can simultaneously contact the card can be obtained, and erasing/printing processes can be simultaneously performed. Examples of functions according to the above apparatus will be described hereinafter. When the front end of the rewritable card being traveled reaches the erasing head, the erasing head driving device thrusts the erasing head to the printing layer. The rewritable card is continuously traveled in that condition, and images printed on the printing layer are erased by the erasing head. Then, when the front end of the rewritable card reaches the printing head, the printing head driving device thrusts the printing head to the printing layer, so that new images are printed by the printing head on the printing layer on which images were erased. When printing is started, the erasing head still contacts the printing layer at the upstream side thereof, and erasing is simultaneously performed.

The amount of time in which the erasing head and the printing head simultaneously contact the card changes according to the distance between the heads. In all cases in which the amount of time for simultaneous erasing/printing processes can be obtained, the distance between the erasing head and the printing head is short, that is, shorter than the length of the card, so that the heads are nearly located. Moreover, the driving devices for contacting each head to the printing layer are individually provided to each head. Therefore, each head can contact the rewritable card over the entire length thereof by individually driving each head for contacting and separating from the rewritable card. In addition, the heads do not obstruct travel of the card, so that the card can be smoothly traveled.

Thus, in the invention, the erasing head and the printing head are nearly located together so as to shorten the processing area, and each head can individually contact the rewritable card over the entire length thereof. Therefore, the printing layer can be provided over the entire length of the rewritable card, so that the printing area can be enlarged. Furthermore, processing time for erasing/printing can be reduced, and compact design of the apparatus can be accomplished. In addition, heat radiation from the printing layer, which is emitted after it is heated by the erasing head until it reaches the printing head, can be reduced. Therefore, the amount of energy required for reheating by the printing head can be reduced, and energy saving is enhanced.

As mentioned above, the length of the processing area, which is the distance between the erasing head and the printing head, must be shorter than the length of the rewritable card in the travel direction. Simultaneous erasing/printing processes are preferably continued in a set period to shorten the processing area, which is most preferably as short as possible since the above-mentioned advantages can be remarkably obtained. Therefore, the distance between the erasing head and the printing head is 90 % or less of that of the rewritable card in the travel direction, preferably is 60 % or less, and more preferably is 30 % or less.

Preferably, the erasing head driving device and the printing head driving device are cams, which are rotated by a common camshaft. In the preferred arrangement, each cam which functions for driving the erasing head or the printing head has a common camshaft, so that only one driving force is needed, and the construction thereof can be simplified. In addition, as the cams have a common camshaft, the loci of the working points of the cams are nearly located, so that the erasing head and the printing head are naturally nearly located. Therefore, the cams design is effective for adjoining the printing head 40 and the erasing head 50.

More specifically, the erasing head driving device may comprise a first arm driven by the first cam so as to swing the erasing head, and the printing head driving device may comprise a second arm driven by the second cam so as to swing the printing head. The first and second arms may extend in the travel direction of the card, and may be rotatably supported at the upstream end in the travel direction. The first arm and the second arm may support the erasing head and the printing head respectively at the downstream ends in the travel direction. The second arm may be disposed above the first arm to overlap therewith in plan view. The downstream end of the second arm may reach the position over the downstream end of the first arm, whereby the erasing head and the printing head are nearly located.

The first arm may be connected to a first sub-arm disposed at the side thereof and having a common swing shaft therewith, and the second arm may be connected to a second sub-arm disposed at the side thereof and having a common swing shaft therewith. The first and second sub-arms may be driven by the first and second cams respectively.

BRIEF DESCRIPTION OF THE DRAWINGS

Fig. 1 is a right side sectional view of the card processing apparatus according to an embodiment of the invention.
Fig. 2 is a view taken along line II-II of Fig. 1.
Fig. 3 is a left side view of the card processing apparatus according to an embodiment of the invention.
Fig. 4 is a schematic view showing a heat-reversible recording material which forms a printing layer of a rewritable card according to an embodiment of the invention.
Fig. 5 shows the function of the heat-reversible recording material.
Fig. 6 is a chart showing transparent/clouded changes according to heating of the heat-reversible recording material.
Fig. 7 is a view taken along line VII-VII of Fig 1.
Fig. 8 is a view taken along line VIII-VIII of Fig. 1.
Figs. 9A through 9D are side views showing positions of an erasing head and a printing head according to rotation angles of a cam gear, wherein Fig. 9A corresponds to a standby position, Fig. 9B corresponds to an erasing position, Fig. 9C corresponds to an erasing/printing position, and Fig. 9D corresponds to a printing position.
Fig. 10 is a view taken along line X-X of Fig. 16.
Fig. 11 is a view taken along line XI-XI of Fig. 16.
Fig. 12 is a control block diagram of a card processing apparatus according to an embodiment of the invention.
Fig. 13 is a flowchart showing functions of a card processing apparatus according to an embodiment of the invention.
Fig. 14 is a right side view of a card processing apparatus according to an embodiment of the invention showing a condition of an erasing process.
Fig. 15 is a view taken along line XV-XV.
Fig. 16 is a right side view of a card processing apparatus according to an embodiment of the invention showing a condition of an erasing/printing processes.
Fig. 17 is a view taken along line XVII-XVII.
Fig. 18 is a right side view of a card processing apparatus according to an embodiment of the invention showing a condition of a printing process.
Fig. 19 is a view taken along line XIV-XIV.
Fig. 20 is a side view of an example of a conventional card processing apparatus showing an erasing/printing mechanism.
Fig. 21 is a side view of another conventional card processing apparatus showing an erasing/printing mechanism.

EP 0 994 435 A2

DETAILED DESCRIPTION OF THE INVENTION

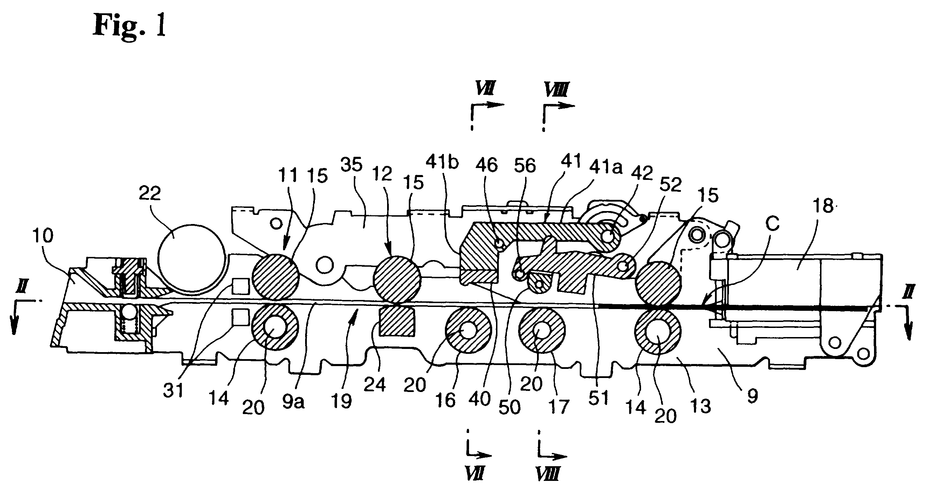

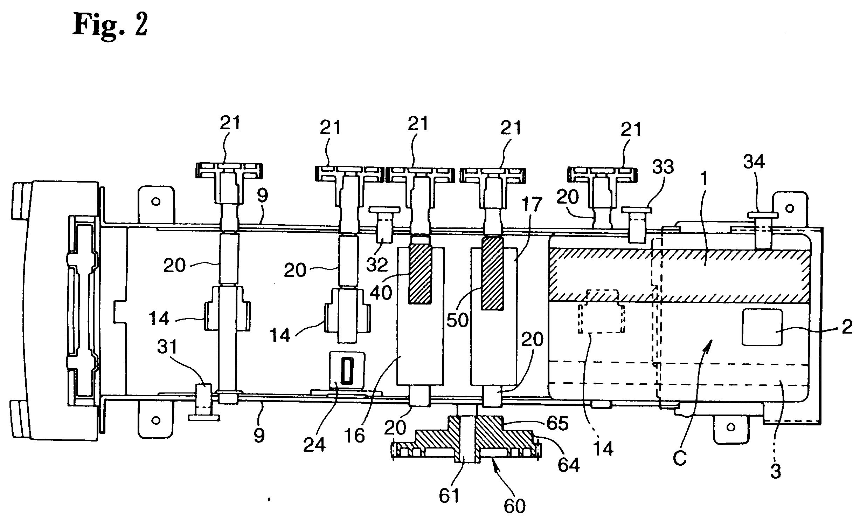

Embodiments of the invention will be explained with reference to the drawings. Fig. 1 is a right sectional view of a card processing apparatus used by a card processing system of the embodiment, and Fig. 2 is a view taken along line II-II of Fig. 1. The left side in the figures is the front side of the unit, the right side in the figures is the rear side of the unit, the upper side in Fig. 2 is the left side of the unit, and the lower side in Fig. 2 is the right side of the unit. In the following descriptions, the front, back, left, and right directions are defined as directions based on such a card processing apparatus. As shown in Fig. 1, when a rewritable card C (hereinafter referred to simply as a "card") is inserted into an insertion opening 10 provided at the front end of the card processing apparatus, the card C is traveled to the standby position at the rear end of the unit. When a predetermined processing command is issued under these conditions, the card C is traveled to the front, and erasing and printing are performed, in that order, on a rewritable layer disposed at the surface of the card C. First, details of the card C will be explained before explanation of the construction of the card processing apparatus.

(1) Construction of Rewritable Card

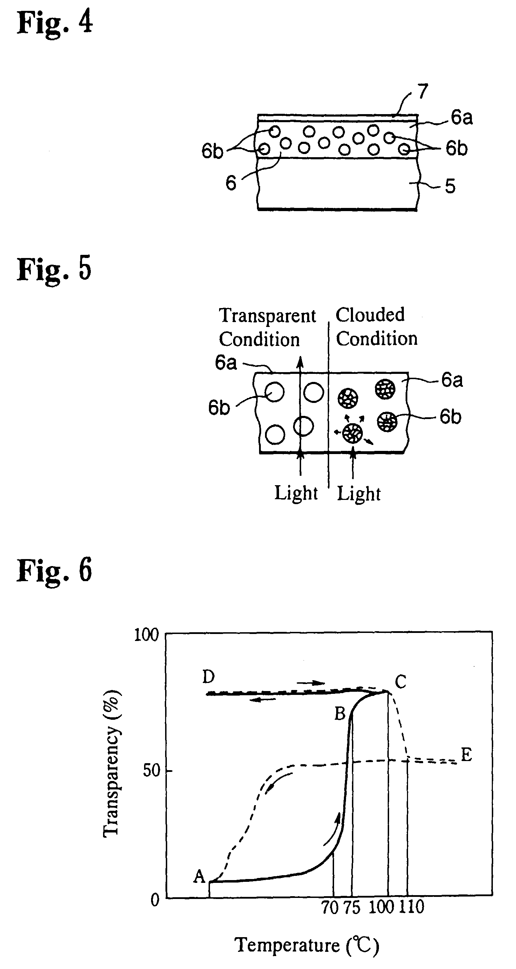

The card C is a rectangular IC card, for example, according to "Japanese Industrial Standard No. 6303". As shown in Fig. 2, the card C comprises a substrate made of a resin such as PVC (polyvinyl chloride). A rewritable layer 1, made of a heat-reversible recording material, is laminated on the substrate. External terminals 2 of an IC chip are provided on the surface of the substrate. A magnetic strip 3 is provided on the reverse surface of the substrate. Rewritable layer 1 is laminated in a strip at the upper side of the card C over the entire length of the card C in Fig. 2. The external terminals 2 are disposed below the rewritable layer 1 and are at a given position at the right side of the card C. The magnetic strip 3 on the reverse surface is laminated at the under side of the card C.
The heat-reversible recording material forming rewritable layer 1 is reversible by heating, and the recording material is easily capable of being repeatedly erased/printed on, in other words, of being rewritten on. As shown in Fig. 4, the heat-reversible recording material is manufactured so that a recording layer 6 in which an organic low-molecular substance 6b is dispersed in a resin 6a, and a protective layer 7, are laminated on a transparent polyester film 5, in that order. A higher fatty acid having a particle size of 1 $\mu$m or less is used for the organic low-molecular substance 6b. The function of the reversibility is explained with reference to Fig. 5. In the transparent condition, the particles in the organic low-molecular substance 6b in the recording layer 6 form relatively large single crystals. Therefore, there are a few frequencies at which incident light passes through the crystal interfaces, so that incident light is transmitted without scattering, and hence the recording layer 6 appears to be transparent overall. In the clouded condition, the particles in the organic low-molecular substance 6b form polycrystals. Therefore, incident light is refracted many times at the crystal interface, so that the light is scattered, and the recording layer 6 can be seen as being white.
Heat-reversible characteristics of the heat-reversible recording material are explained with reference to Fig. 6. At first, the heat-reversible recording material is in the clouded condition (A) at room temperature (20 to 30°C). When the recording material is heated, the transparency begins to increase from about 70°C, as shown by the continuous line, and the condition becomes most transparent (B to C) at about 75 to 100°C. The transparent condition is maintained, even if the recording material is cooled to room temperature (D). Then, as shown by the broken line, the material in the most transparent condition is heated again to 110°C or more, thereby changing to an intermediate condition between the most transparent condition and the most clouded condition (D to C to E). When the material is cooled to room temperature, it returns to the original clouded condition (E to A).

(2) Construction of Card Processing Apparatus

The construction of the card processing apparatus will be explained hereinafter. Numerals 9 in Fig. 1 to Fig. 3 indicate a pair of right and left lower side frames facing parallel to each other in a spaced condition. As shown in the figures, a pair of first travel rollers 11, a pair of second travel rollers 12 and a pair of third travel rollers 13 are disposed, in that order, from the front along the center of the lower side frames 9 and 9. Each pair of travel rollers 11, 12, and 13 consists of a lower driving roller 14 and an upper following roller 15 so as to clamp the card C and travel it from the front to the rear, or from the rear to the front, according to the rotation of the driving roller 14. A printing platen roller 16 and an erasing platen roller 17 are disposed, in that order, from the front between the second pair of travel rollers 12 and the third pair of travel rollers 13. A printing head 40 is disposed above the printing platen roller 16. An erasing head 50 is disposed above the erasing platen roller 17.
As shown in Fig. 1, an IC unit 18 is disposed at the rear end between the lower side frames 9 and 9. The IC unit 18 contacts the external terminals 2 of the IC chip of the card C so as to perform input/output with respect to the IC chip 2. A travel path 19 is formed between an insertion opening 10 for the card C and the IC unit 18. The travel path 19 horizontally connects the clearances of the upper and lower rollers 14 and 15 of the first through third pairs of rollers

5

11, 12 and 13, the clearance of the printing platen roller 16 and the printing head 40, and the clearance of the erasing platen roller 17 and the erasing head 50. A groove-shaped card guide 9a is provided at the inner surface of the lower side frame 9 so as to smoothly travel the card C along the travel path 19. As mentioned above, the card C is first traveled to the standby position at the rear end of the unit when the card C is inserted into the insertion opening 10. The standby position is inside the IC unit 18.

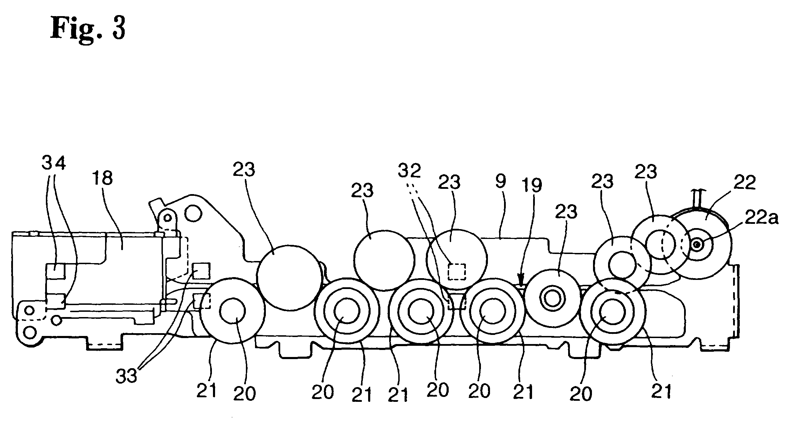

As shown in Figs. 1 and 2, each driving roller 14 of the first through the third pairs of rollers 11, 12, and 13 and each platen roller 16 and 17 synchronously rotates with driving shafts 20 rotatably supported by the lower side frames 9 and 9. Each driving shaft 20 penetrates the left lower side frame 9, and the projected end thereof from the lower side frame 9 is attached to a driving gear 21. A main motor 22 is mounted at the rear end portion of the lower side frames 9 and 9 and at a slightly forwarded side of the insertion opening 10. As shown in Fig. 3, plural intermediate gears 23 are arranged at the left side of the left lower side frame 9. The intermediate gears 23 connect the driving gears 21 and a pinion 22a of the main motor 22. When the main motor 22 rotates, the rotation force thereof is transmitted to the driving gear 21 via intermediate gears 23 so as to rotate the driving shaft 20 in the same direction, whereby the driving rollers 14 of the first through the third pairs of rollers 11, 12 and 13 and the platen rollers 16 and 17 rotate. The card C is traveled along the travel path 19 according to the direction of rotation of the driving rollers 14 and the platen rollers 16 and 17. As shown in Fig. 2, a magnetic head 24 for performing reading/writing of data on the magnetic strip 3 of the card C is disposed at the right side of the driving roller 14 of the second pair of rollers 12.

As shown in Fig. 2, first through fourth card sensors 31, 32, 33, and 34 for detecting the card C traveled are provided, in that order, from the front. The first card sensor 31 is mounted at the front end of the right lower side frame 9. The second through the fourth card sensor 32, 33, and 34 are mounted to the left lower side frame 9.

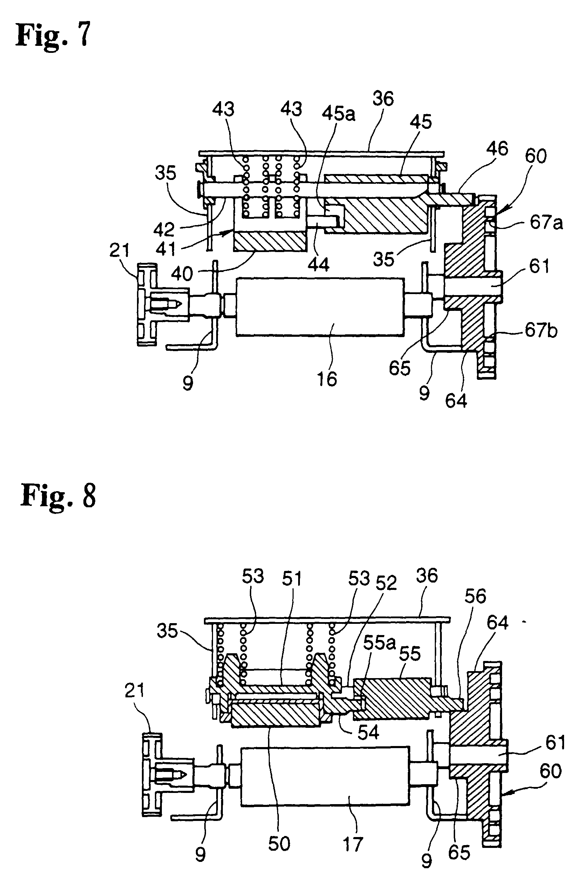

As shown in Fig. 1 and Fig. 7, a pair of right and left upper side frames 35 and 35 is attached to the lower side frames 9 and 9. The rear ends of the upper side frames 35 are hinged to the lower side frames 9. Therefore, the upper side frames 35 swing up and down so as to coincidentally open and close. Arms 41 and 51 extending toward the front are hinged to the upper side frames 35 and 35 so as to swing. As shown in Fig. 1, the printing head 40 is attached to the arm 41, and the erasing head 50 is attached to the arm 51.

As shown in Fig. 1, the arm 41 for the printing head 40 has an L-shaped configuration in side view, in which a long portion 41a extends toward the front and a short portion 41b extends downward from the front end of the long portion 41a. The rear end of the long portion 41a is supported at the left side of a swing shaft 42 which is supported by the upper side frames 35 and 35. The printing head 40 is attached to the lower surface of the short portion 41b which is a swinging end. As shown in Fig. 7, a top panel 36 is disposed above the printing head 40 and the erasing head 50. The top panel 36 is secured to the upper side frames 35 and 35. A pair of right and left compression springs 43 is disposed between the top panel 36 and the swinging end of the arm 41. The printing head 40 is usually biased downward by the compression springs 43 via the arm 41. As shown in Fig. 1 and Fig. 7, in the vicinity of the inner corner defined by the long portion 41a and the short portion 41b, a pin 44 projects from the right side surface of the arm 41. A sub-arm 45 forwardly extending parallel to the arm 41 is disposed at the right side of the arm 41. The sub-arm 45 is supported by the swing shaft 42 so as to swing around the shaft 42 as well as the arm 41. A recess 45a is formed at the arm 41 side of the front end of the sub-arm 45. The pin 44 engages with the recess 45a, so that the sub-arm 45 swings approximately coincidently with the arm 41. A cam pin 46 coaxial with the pin 44 projects from the right side surface of the front end of the sub-arm 45.

As shown in Fig. 1, the arm 51 for the erasing head 50 is disposed below the arm 41 for the printing head 40. A swing shaft 52 is supported by the side frames 35 and 35, and the rear end of the arm 51 is supported by the left end of the shaft 52, whereby the arm 51 swings around the shaft 52. The shaft 52 is located below the shaft 42 for the printing head 52 and is slightly rearward thereof. The arm 51 extends in the vicinity of the inner corner of the arm 41 for the printing head 40. The erasing head 50 is mounted on the lower surface of the front end of the arm 51. As shown in Fig. 7, a pair of right and left compression springs 53 is disposed between the top panel 36 and the swinging end of the arm 51. The erasing head 50 is usually biased downward by the compression springs 53 via the arm 41 as well as the printing head 40. A pin 54 projects in front of the erasing head 50 from the right side surface of the arm 51. A sub-arm 55 forwardly extends approximately parallel to the arm 51 in the right side of the arm 51. The rear end of the sub-arm 55 is supported by the swing shaft 52 so as to swing around the shaft 52 as well as the arm 51. A recess 55a is formed at the arm 51 side of the front end of the sub-arm 55. The pin 54 engages with the recess 55a, so that the sub-arm 55 swings approximately coincidently with the arm 51. A cam pin 56 coaxial with the pin 54 projects from the right side surface of the front end of the sub-arm 55.

As shown in Fig. 2, Fig. 7, and Fig. 8, a cam gear 60 is disposed at the outer side (the right side) of the right lower side frame 9. The cam gear 60 swings the printing head 40 and the erasing head 50 so as to contact and separate from the traveled card C. The cam gear 60 is rotatably supported by the right lower side frame 9 via a shaft 61, and rotates by a cam motor (not shown) in the counterclockwise direction when viewed from the right side. The cam gear 60 is formed with a cam (printing head driving device) 64 for swinging the printing head 40 and a cam (erasing head driving device) 65 for swinging the erasing head 50 coaxially formed in predetermined profiles. As shown in Fig. 7, the cam pin 46 for the sub-arm 45, which is biased downward coincidently with the printing head 40, usually contacts the upper surface of the cam 64 for the printing head 40 in a sliding connection. As shown in Fig. 8, the cam pin 56 for the sub-arm 55, which is biased downward coincidently with the erasing head 50, usually contacts the upper surface of the cam 65 for the erasing head 50 in a sliding connection.

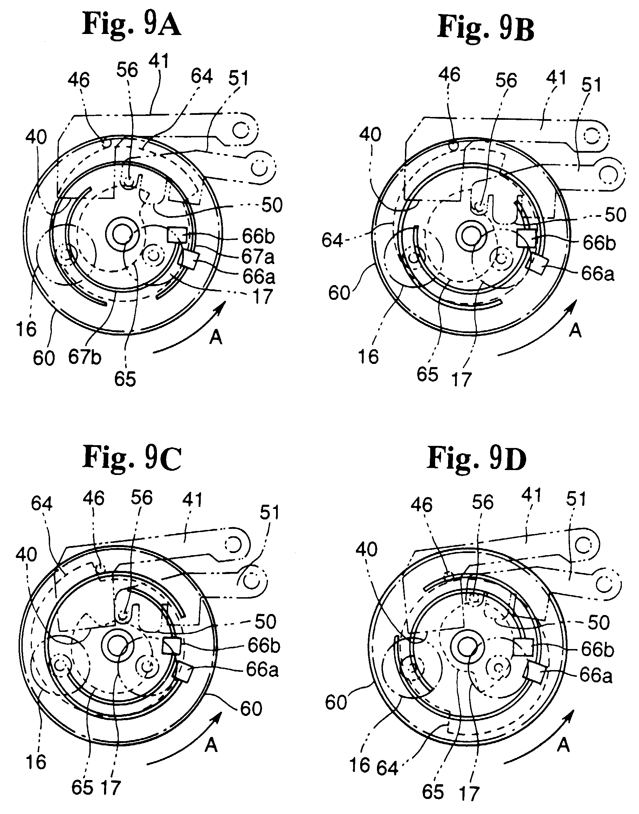

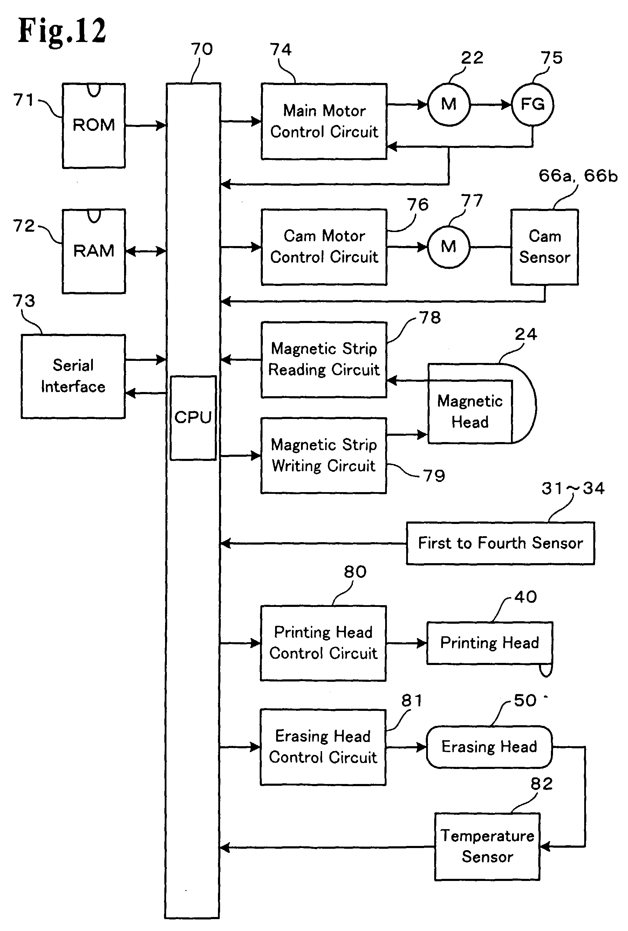

The contact and separating condition of the erasing head 40 and the printing head 50 with respect to the card C is established according to the rotation angle of the cam gear 60. As shown in Fig. 9A to Fig. 9D, two cam sensors 66a and 66b which are located on the outer side (the side in the figures proximate to the viewer) of the cam gear 60 control the rotation angle of the cam gear 60. The cam sensor 66a and 66b detect circular ribs 67a and 67b formed on the outer surface of the cam gear 60 coaxially with the cam gear 60. The sensing signal of the cam sensor 66a and 66b is usually output to the cam motor via a CPU 70 shown in Fig. 12. The cam motor controls the rotation of the cam gear 60 according to the signal pattern such that the cam gear 60 stops at four positions: a standby position, an erasing position, an erasing/printing position and a printing position, in that order.

The four positions will be explained with reference to Fig. 9A to Fig. 9D assuming that the card C is on each platen roller 16 and 17.

When the cam gear is at the standby position, as shown in Fig. 9A, the cam 64 for the erasing head and the cam 65 for the printing head thrust up the sub-arms 45 and 55 and the arms 41 and 51 via cam pins 46 and 56, so that the printing head 40 and the erasing head 50 are at a position apart from the card C. Fig. 7 and Fig. 8 show the condition in which the printing head 40 and the erasing head 50 are apart from the card C.

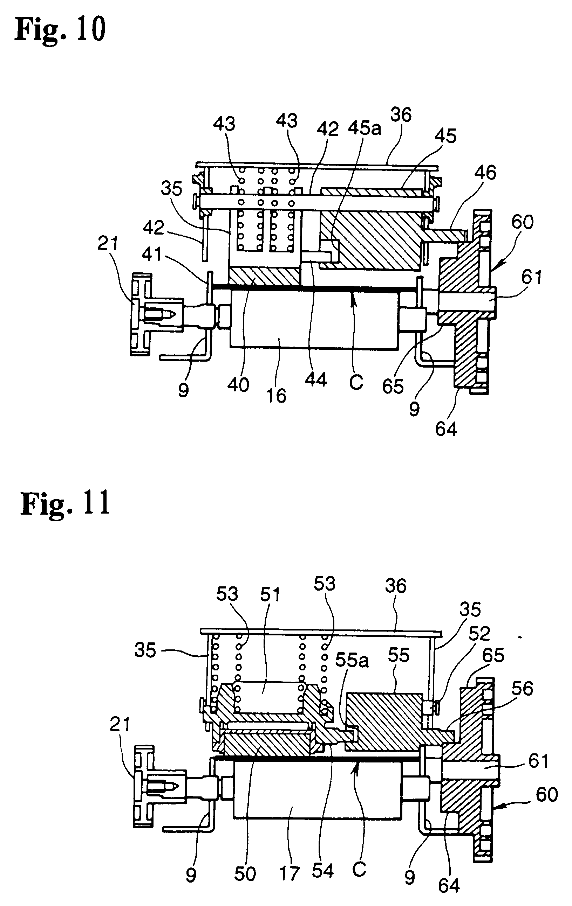

When the cam gear 60 rotates to the direction taken at the arrow A from the above condition, as shown in Fig. 9B, the cam pin 56 of the sub-arm 55 for the erasing head 50 slips out the top end of the cam 65 for the erasing head, so that only the erasing head 50 swings downward via arm 51 by the force of the compressing spring 53 and thrusts the card C. Fig. 11 shows the condition in which the erasing head 50 thrusts the card C.

Next, when the cam gear 60 rotates to the direction taken at the arrow A and reaches the erasing/printing position, as shown in Fig. 9C, the cam pin 46 of the sub-arm 45 for the printing head 40 slips out the top end of the cam 64 for the printing head, so that the printing head 40 swings downward via arm 41 by the force of the compression spring 43 and thrusts the card C while the erasing head 50 maintains its condition. Fig. 10 shows the condition in which the printing head 40 thrusts the card C. Thus, the printing head 40 and the erasing head 50 thrust the card C at the erasing/printing position.

When the cam gear 60 further rotates to the direction taken at the arrow A and reaches the printing position, as shown in Fig. 9D, the cam 65 for the erasing head 50 thrusts up the sub-arm 55 and arm 51 via the cam pin 56 for the erasing head 50, so that only the erasing head 50 upwardly swings to separate from the card C while printing head 40 maintains its thrusting condition to the card C. Next, when the cam gear 60 further rotates to the direction taken at the arrow A, it returns to the standby position again, thereby restoring the condition shown in Fig. 9A.

The coincident processing time for erasing /printing processes when the printing head 40 and the erasing head 50 coincidentally thrust the card C while the cam gear 60 is at the erasing/printing position continues for a certain time. That is, the distance between the printing head 40 and the erasing head 50, in other words, the length of the processing area, is shorter than the length of the card C in the travel direction, so that heads 40 and 50 are nearly located together. Specifically, the length of the processing area is 30% or less of the length of the card C in the embodiment.

Fig. 12 shows a control block diagram for the above card processing apparatus. The CPU 70 is a microcontroller containing peripheral functions such as serial IO, parallel IO, timer, AD converter, and watchdog timer. The CPU 70 is connected to a ROM 71 recording a control program and permanent data so as to perform various kinds of controls. The CPU 70 is connected to a RAM 72 which can store printing data, command data, various kinds of set values, and standard data according to need, and to a serial interface 73 which receives erasing/printing commands from a prior piece of equipment and issues it to the CPU 70.

The first through fourth card sensors 31 to 34 output sensing signals to the CPU 70, and CPU 70 outputs control signals to a main motor control circuit 74 so as to control the movement of the main motor 22, such as rotation frequency, rotation direction, and starting/stop and the like. The main motor 22 is mounted with a FG (frequency generator) 75 so that the rotation frequency of the main motor 22 can be detected by measuring the pulse width of the pulse output by the FG 75. The CPU 70 outputs the starting/stop signal to the cam motor 77 (not shown in the previous figures) via cam motor control circuit 76 according to the output of the second through fourth card sensors 32 to 34 so as to control the cam gear 60 to the above-mentioned four positions. The magnetic head 24 is connected to a reading circuit 78 which reads the magnetic data written in the magnetic strip 3 of the card C, and writing circuit 79 which writes data to the magnetic strip 3. The CPU 70 performs reading/writing for magnetic data with respect to the magnetic strip 3 through the magnetic head 24 and the circuits 78 and 79 thereof.

The CPU 70 generates image (bit map) data and transfers the data to the printing head 40 through the printing head control circuit 80 while synchronizing the travel distance of the card C, so that a desired image is printed on the printing layer of the card C. Moreover, the CPU 70 heats the erasing head to a given erasing temperature through an erasing head control circuit 81. The erasing head 50 contains a temperature sensor 82 for sensing the temperature of the erasing head 50. The temperature of the erasing head 50 can be measured as a digital value by an A/D converter contained in the CPU 70. The CPU 70 calculates the data for the energizing time according to the detected temperature of the erasing head 50 and the set value data recorded in the ROM 71 or the RAM 72, and outputs an energizing pulse having a pulse width corresponding to the energizing time. Thus, the temperature of the erasing head 50 is controlled to a predetermined erasing temperature for making the heat-reversible material forming the printing layer 1 become transparent.

(3) Movement of Card Processing Apparatus

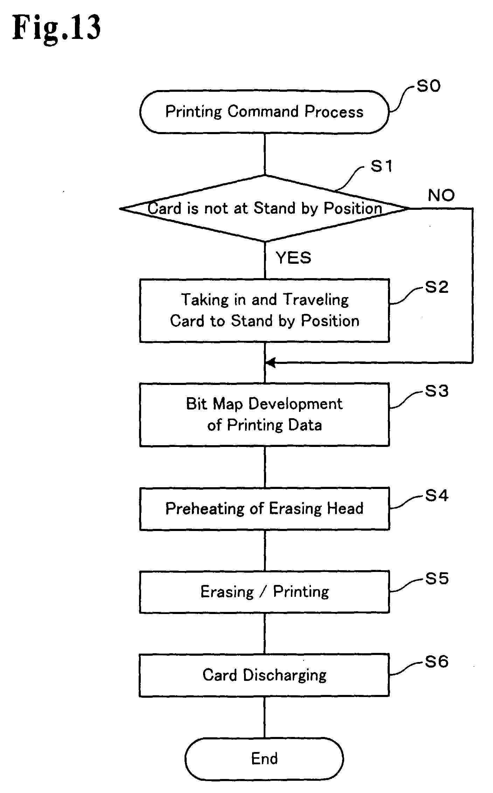

The function of the above card processing apparatus will be explained in focusing on erasing/printing processing to the printing layer 1 of the card C with reference to the flowchart in Fig. 13.

A. Preparing Step

When an erasing/printing command is issued to the CPU 70 through the serial interface 73 from preceding equipment (not shown), the CPU 70 calls a printing command processing subroutine S0 according to the program stored in the ROM 71. In the printing command subroutine S0, it is determined whether or not the card C is at standby at the standby position by receiving signals from the third and fourth card sensors 33 and 34 in step S1. When the determination is that the card C is at standby, the algorithm jumps to the step S3.

On the other hand, when the determination is that the card C is not at standby, the algorithm goes to the step S2, in which the first card sensor 31 waits for insertion of the card C. When the insertion of the card C is detected by the first card sensor 31, the CPU 70 rotates the main motor 22 through the main motor control circuit 74, thereby traveling the card C to the standby position. Fig. 1 and Fig. 2 show the condition in which the card C is traveled to the standby position. In this condition, as shown in Fig. 7 and Fig. 8, the printing head 40 and the erasing head 50 upwardly separate from the travel path 19 since the cam gear 60 is at the standby position. In the next step S3, the CPU 70 performs image (bit map) development on the row of characters designated by a printing command in the RAM 72. The algorithm goes to the step S4, in which preheating for the erasing head 50 is performed.

B. Preheating of the Erasing head

For the preheating of the erasing head 50, the temperature TES detected by the temperature sensor 82 contained in the erasing head 50 and a preheating temperature set value TER stored in the ROM 71 or the RAM 72 is used. The preheating is performed by energizing according to the equation below when the duty value of the erasing head energizing pulse is defined as EPD.

$$EPD=(TER-TES)\times GAIN \text{ (wherein the maximum value is 100\%)} \tag{A}$$

EPD is not decided by one calculation; instead, a feedback control is performed by repeated calculation each time the energizing period (for example 10 μs) elapses.

If the erasing head 50 is rapidly heated to the preheating temperature, large differences may occur between the actual surface temperature and the value detected by the temperature sensor 82 due to the time constant of the temperature sensor 82 contained in the erasing head 50 and the time it takes for heat conduction to the temperature sensor 82 from the heating element. Therefore, the erasing head 50 is preferably heated gradually. The GAIN in the equation (A) is preferably about 1 to 2.

C. Erasing Only

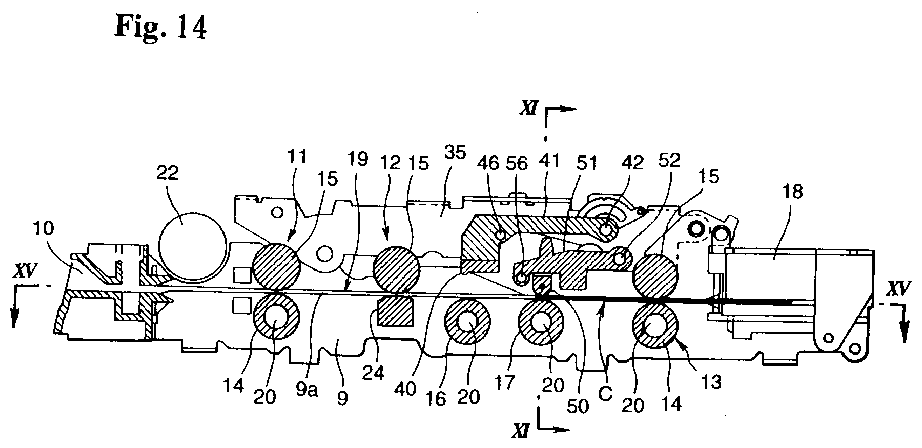

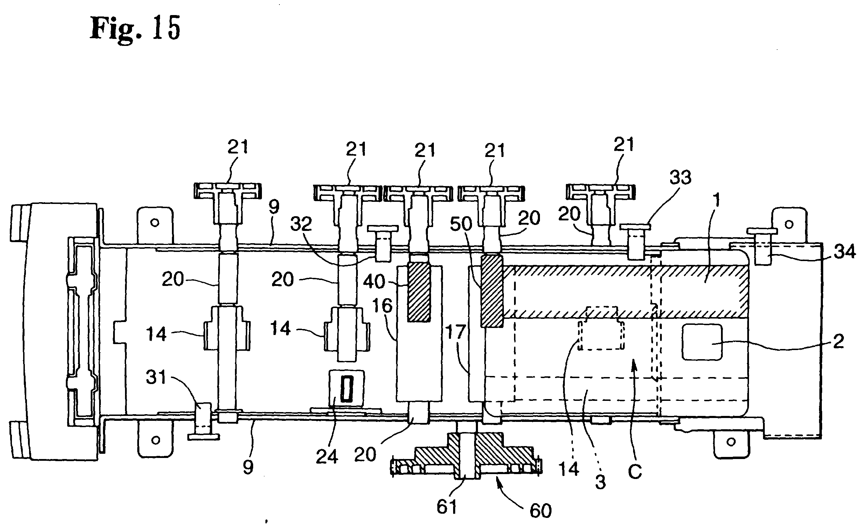

When the preheating of the erasing head 50 is accomplished, the algorithm goes to step S5, in which erasing/printing processing to the printing layer 1 of the card C is performed. In the erasing/printing processing, the card C at the standby position is traveled forward while the travel distance is measured at a low travel speed. As shown in Fig. 14 and Fig. 15, when the front end of the card C reaches the position of the erasing head 50, the cam motor 77 is predetermined through the cam motor control circuit 76, so that the cam gear 60 rotates to the erasing position and the erasing head 50 thrusts the printing layer 1 of the card C. The printing layer 1 is heated to the given erasing temperature by the erasing head 50. The image on the printing layer 1 is continuously erased since the card C is traveled forward.

D. Erasing/Printing

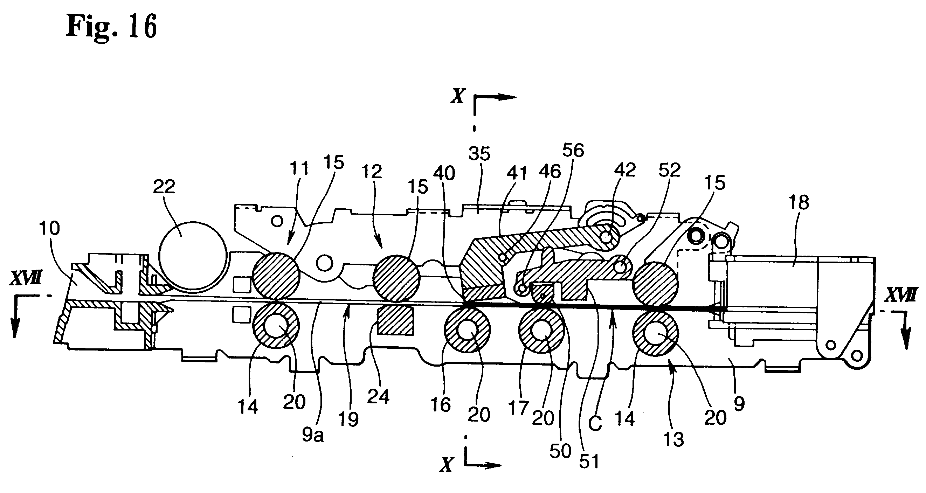

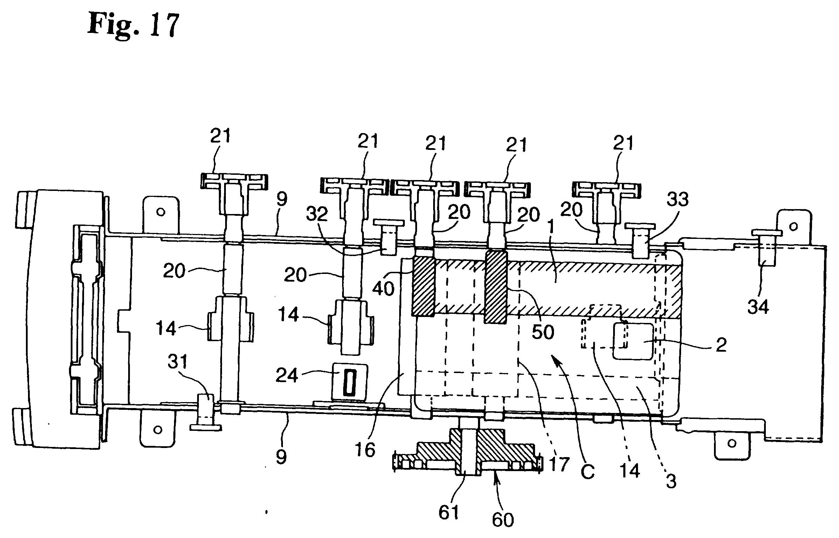

As shown in Fig. 16 and Fig. 17, when the front end reaches the position of the printing head 40, the cam motor 77 is driven through the cam motor control circuit 76, so that the cam gear 60 rotates to the erasing/printing position to thrust the printing head 40 to the printing layer 1 where the image is erased. When the printing head 40 thrusts the printing layer 1, the printing data stored in the RAM 72 is transferred to the printing head 40 in order every time the card C is traveled by a predetermined amount (for example about 0.1 mm). When data corresponding to a line has been transferred to the printing head 40, a printing head energizing pulse, in which the pulse width is obtained by a timer contained in the CPU 70, is output to the printing head 40 through the printing head control circuit 80. Subsequently, the heating element of the printing head 40 is selectly energized based on the printing data, so that an image is thermally printed on the printing layer 1. Thus, according to the travel of the card C, image erasing by the erasing head 50 and new image printing by the printing head 40 are performed in parallel.

E. Printing Only

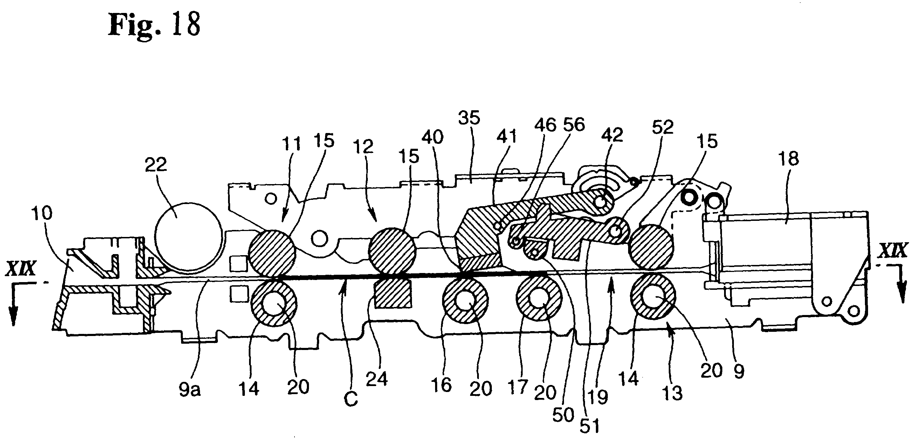

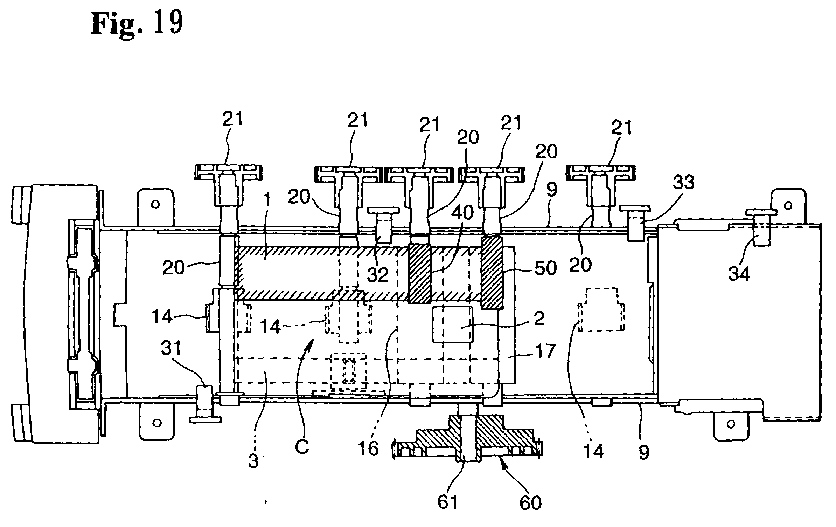

Then, as shown in Fig. 18 and Fig. 19, when the rear end of the card C reaches the position of the erasing head 50, the cam motor 77 is driven through the cam motor control circuit 76, so that the cam gear 60 rotates to the printing position to separate the erasing head 50 from the printing layer 1, and only printing is performed hereinafter. When all the image data has been printed, the cam motor 77 is driven through the cam motor control circuit 76, so that the cam gear 60 returns to the standby position. Simultaneously, the printing head 40 and the erasing head 50 upwardly separate from the card C. Thus, the erasing/printing is accomplished and the algorithm goes to the card discharging in the step S6.

In the step S6, the card C is traveled to the front at a high speed (for example 300 mm/s). When the card C passes through the second card sensor 32, the card C is traveled in a given distance until the front end of the card C projects from the card insertion opening 10, and then the main motor 22 stops.

(4) Functions and Effects of the Embodiment

According to the card processing apparatus of the embodiment, the printing head 40 and the erasing head 50 are nearly located together so that the heads simultaneously thrust the printing layer 1 of the card C for a certain continuous interval. Moreover, the cams 64 and 65 for thrusting the head 40 and 50 to the printing layer 1 are individually provided. Therefore, the heads 40 and 50 can contact over the entire length of the card C, so that the length of the printing layer 1, in other words, the printing area, can be enlarged to be as large as possible. Furthermore, the processing time for erasing/printing can be shortened, and compact design of the apparatus can be accomplished. In addition, the heat radiation which occurs after the printing layer 1 is heated by the erasing head 50 until the printing layer 1 reaches the printing head 40 is reduced, so that the energy for reheating by the printing head 40 is reduced and energy saving is accomplished.

In the embodiment, the printing head 40 and the erasing head 50 are individually driven by the cams 64 and 65 formed on the cam gear 60, and the cams 64 and 65 have the common camshaft 61. Therefore, a driving force for rotating the camshaft, namely the driving force for swinging the printing head 40 and the erasing head 50, can be unified, so that the construction thereof can be simplified. Furthermore, as the cams 64 and 65 are formed on the cam gear 60 and have the common camshaft 61, the loci of the working points (the locus of the cam top) of the cams 64 and 65 are nearly located, so that the heads 40 and 50 are naturally nearly located. Therefore, the design is effective for adjoining the printing head 40 and the erasing head 50.

In the embodiment, the arms 41 and 51 for swinging the printing head 40 and the erasing head 50 engages with the cams 64 and 65 via sub-arms 45 and 55. If the arms 41 and 51 are directly engaged with the cams 64 and 65, the pins for the engaging must be long, and the deflection of the pins due to the swinging of the the arms 41 and 51 increase. As a result, the height of the swing the arms 41 and 51 by the cams 64 and 65 are lower than the desired level, so that erasing/printing may not be performed accurately. On the other hand in the embodiment, the arms 41 and 51 for swinging the printing head 40 and the erasing head 50 are connected to the cams 64 and 65 via short pins 44 and 54 and sub-arms 45 and 55, and therefore the above mentioned problem is unlikely to occur, and erasing/printing processes can be accurately performed.

As mentioned above, the invention is characterized in that it comprises the driving devices for individually contacting and separating the erasing head and the printing head with respect to the rewritable card, and in that the distance between the erasing head and the printing head is set so that each head can simultaneously contact the card and the erasing/printing processes can be simultaneously performed in a certain period. Therefore, in the invention, the printing area can be enlarged, erasing/printing processing time can be shortened, compact design of the apparatus can be accomplished, and energy saving can be enhanced.

**Claims**

1. A processing method for a rewritable card having a printing layer made of a heat-reversible recording material on which erasing/printing processes of images are repeatedly performed while the card is traveled in a direction, the method comprising:

   erasing images printed on the printing layer by an erasing head; and
   printing images on the printing layer by a printing head;
   wherein the erasing of the images by the erasing head and the printing of the images by the printing head are simultaneously performed.

2. A processing method for a rewritable card according to claim 1, wherein the erasing is first started and then the printing is started, thereby the erasing and the printing are simultaneously performed.

3. A processing apparatus for a rewritable card having a printing layer made of a heat-reversible recording material on which erasing/printing processes of images are repeatedly performed while the card is traveled in a direction, the apparatus comprising:

   a travel path for the rewritable card;
   a travel device for traveling the card in a direction along the travel path;
   an erasing head movably disposed along the travel path so as to contact and separate from the printing layer of the card being traveled, for erasing images printed on the printing layer;
   a printing head movably disposed along the travel path at a downstream side of the erasing head so as to contact and separate from the printing layer of the card being traveled, for printing images on the printing layer; and
   an erasing head driving device and a printing head driving device for respectively moving the erasing head and the printing head independently to each other;
   wherein the distance between the erasing head and the printing head is set so that the both heads may simultaneously contact the card to simultaneously perform the erasing and the printing.

4. A processing apparatus for a rewritable card according to claim 3, wherein the distance between the erasing head and the printing head is not more than 90 % of that of the rewritable card in a direction of travel.

5. A processing apparatus for a rewritable card according to claim 3, wherein the erasing head driving device comprises a first cam for contacting and separating the erasing head with respect to the printing layer;

   the printing head driving device comprises a second cam for contacting and separating the printing head with respect to the printing layer;
   the first cam and the second cam have a common camshaft so as to be driven by the camshaft.

6. A processing apparatus for a rewritable card according to claim 5, wherein the erasing head driving device comprises a first arm driven by the first cam so as to swing the erasing head;

   the printing head driving device comprises a second arm driven by the second cam so as to swing the printing head;
   the first and second arms extend in a direction of travel of the card, and are rotatably supported at an upstream end in the direction of travel.

7. A processing apparatus for a rewritable card according to claim 6, wherein the first arm and the second arm support the erasing head and the printing head respectively at downstream ends in the direction of travel;

   the second arm is disposed above the first arm overlapping therewith in plan view;
   the downstream end of the second arm reaches the position over the downstream end of the first arm, whereby the erasing head and the printing head are nearly located.

8. A processing apparatus for a rewritable card according to claim 7, wherein the first arm is connected to a first sub-arm disposed at the side thereof and having a common swing shaft therewith;

   the second arm is connected to a second sub-arm disposed at the side thereof and having a common swing shaft therewith;

the first and second sub-arms are driven by the first and second cams.

# Fig. 1

Fig. 2

EP 0 994 435 A2

# Fig. 3

# Fig. 4

# Fig. 5

# Fig. 6

# Fig. 7

# Fig. 8

# Fig. 9A

# Fig. 9B

# Fig. 9C

# Fig. 9D

**Fig. 10**

**Fig. 11**

# Fig.12

# Fig.13

```
        ┌─────────────────────────────┐ ╱─SO
        │  Printing Command Process   │
        └─────────────────────────────┘
                      │
                      │              ╱─S1
                  ╱───────────╲                    NO
        ◁────Card is not at Stand by Position───────┐
                  ╲───────────╱                     │
                      │ YES                         │
        ┌─────────────────────────────┐ ╱─S2        │
        │     Taking in and Traveling │             │
        │    Card to Stand by Position│             │
        └─────────────────────────────┘             │
                      │◀────────────────────────────┘
        ┌─────────────────────────────┐ ╱─S3
        │     Bit Map Development      │
        │      of Printing Data        │
        └─────────────────────────────┘
                      │
        ┌─────────────────────────────┐ ╱─S4
        │   Preheating of Erasing Head │
        └─────────────────────────────┘
                      │
        ┌─────────────────────────────┐ ╱─S5
        │       Erasing / Printing     │
        └─────────────────────────────┘
                      │
        ┌─────────────────────────────┐ ╱─S6
        │       Card Discharging       │
        └─────────────────────────────┘
                      │
            ┌─────────────────┐
            │       End       │
            └─────────────────┘
```

# Fig. 14

EP 0 994 435 A2

**Fig. 15**

## Fig. 16

Fig. 17

Fig. 18

# Fig. 19

EP 0 994 435 A2

# Fig. 20

# Fig. 21